# EUROPEAN PATENT APPLICATION

(11) **EP 4 300 804 A1**
(43) Date of publication of application: **03.01.2024**
(21) Application number: 22182533.4
(22) Date of filing: 01.07.2022
(51) Int. Cl.: H02M 7/483, H02M 3/155, C25B 9/65, H02J 3/18

(54) **CHAIN-LINK CONVERTER FOR HYDROGEN ELECTROLYZER RECTIFIER IN LARGE ELECTROLYZER STATIONS**

(71) Applicant: Hitachi Energy Ltd, 8050 Zürich (CH)
(72) Inventor: Svensson, Jan, 723 46 Västerås (SE); Johansson, Nicklas, 722 46 Västerås (SE); Zhang, Weichi, 100015 Beijing (CN); Chou, Shih-Feng, 723 58 Västerås (SE)
(74) Representative: AWA Sweden AB

(57) **Abstract**

A system (100) and a method for driving hydrogen electrolysis are disclosed. The system comprises a transformer (110) connectable to an electrical power grid (101) for galvanically isolating the system from the electrical power grid and for adapting an input voltage level associated with an alternating current received from the electrical power grid. The system further comprises a chain-link converter unit (120) comprising at least one chain-link branch (130) connected to an AC line of the transformer. The at least one chain-link branch comprises a plurality of serially-connected converter cell units (140) and an inductor (150). At least one of the plurality of serially-connected converter cell units comprises a first terminal (147) and a second terminal (149). The at least one of the plurality of serially-connected converter cell units is dedicated to individually provide a direct current to one electrolyzer unit (160) connected between the first terminal and the second terminal. The system further comprises a control unit (170) configured to control the direct current output from the at least one of the plurality of serially-connected converter cell units based on a reference value for driving the electrolyzer unit.

## Description

### TECHNICAL FIELD

The present disclosure generally relates to the field of electrical power conversion and, in particular, to a method and a system for driving hydrogen electrolysis in electrolyzer stations by means of a rectifier. More specifically, the present disclosure relates to a system including a converter arrangement for converting an AC current into a DC current for use with at least one electrolyzer unit and to a method for controlling such a system.

### BACKGROUND

In order to limit the impact and the negative effects of climate change, a reduction of emission of CO₂ and other gases which contribute to global warming is needed. One way to de-carbonize sectors which are hard to reach with other methods is by using hydrogen, which is an energy carrier. One way of producing hydrogen is by electrolysis, which splits water into oxygen and hydrogen using electricity. By using electricity from renewable sources, so called "green hydrogen" can be produced.

Hydrogen may for example be produced to a large extent when there is an excess of renewable power, such as wind or solar, and the electricity prices are low. There are several electrolyzer technologies that can be used in order to produce hydrogen. Regardless of the chemical reaction used in the process, the systems normally include at least one power electronic converter transforming an AC current from the electrical power grid to a DC current.

One example used today for conversion of the AC current is a 12-pulse thyristor rectifier. This solution is however problematic and brings challenges, for example since harmonics on the AC side will vary with varying electrolyzer load. There is therefore a need for harmonic filters to be used together with the thyristor rectifiers. A further issue with the use of thyristor rectifiers is that the reactive power varies with the produced hydrogen, which needs to be solved by the use of a reactive power compensator device, such as the STATCOM.

It is therefore of interest to provide an improved method and system for transforming the AC current to a DC current for use with an electrolyzer unit.

### SUMMARY

It is therefore a goal of the present disclosure to provide a system and a method which may provide a controlled power conversion for use with at least one electrolyzer unit.

To achieve this goal, the present disclosure provides a system comprising at least one transformer, a chain-link converter unit, and a control unit, and a method for controlling the system, as defined by the independent claims. Further embodiments are provided in the dependent claims.

According to a first aspect of the present disclosure, a system is provided. The system comprises a transformer connectable to an electrical power grid. The at least one transformer is configured for galvanically isolating the system from the electrical power grid and for adapting an input voltage level associated with an alternating current received from the electrical power grid. The system further comprises a chain-link converter unit. The chain-link converter unit comprises at least one chain-link branch connected to an AC line of the transformer. The at least one chain-link branch comprises a plurality of serially-connected converter cell units and an inductor. At least one of the plurality of serially-connected converter cell units comprises a first terminal and a second terminal. The at least one of the plurality of serially-connected converter cell units is dedicated to individually provide a direct current to one electrolyzer unit connected between the first terminal and the second terminal. The system further comprises a control unit configured to control the direct current output from the at least one of the plurality of serially-connected converter cell units based on a reference value for driving the electrolyzer unit.

According to a second aspect of the present disclosure, a method for controlling a system is provided. The system comprises a transformer connectable to an electrical power grid for galvanically isolating the system from the electrical power grid and for adapting an input voltage level associated with an alternating current received from the electrical power grid. The system further comprises a chain-link converter unit comprising at least one chain-link branch connected to an AC line of the transformer. The at least one chain-link branch comprises a plurality of serially-connected converter cell units and an inductor. At least one of the plurality of serially-connected converter cell units comprises a first terminal and a second terminal. The at least one of the plurality of serially-connected converter cell units is dedicated to individually provide a direct current to one electrolyzer unit connected between the first terminal and the second terminal.

The method comprises receiving a reference value for driving the electrolyzer unit and indicative of a target value for a direct current output between the first terminal and the second terminal. The method further comprises controlling the at least one of the serially-connected converter cell units based on the received reference value.

By reference value it is herein meant a control value to be used for operating the electrolyzer unit. A reference value may for example be the volume or amount of hydrogen to be produced by the electrolyzer unit or the rate at which the electrolyzer unit is intended to produce hydrogen. Such a reference value may for example be indicative or at least representative of a target value to be used for operation of the at least one of the plurality of serially-connected converter cell units in order to achieve the reference value. The target value derived from the reference value may for example be the level of direct current to be output between the first terminal and the second terminal of the at least one of the plurality of serially-connected converter cell units.

A chain-link branch may be referred to as a chain-link arm or similar. Usually, each phase may have one corresponding chain-link branch connected to it.

The first and second terminals of the at least one of the plurality of serially-connected converter cell units may also be referred to as the positive pole and the negative pole, or the positive terminal and the negative terminal of the at least one of the plurality of serially-connected converter cell units.

In the present embodiments, a converter cell unit of the plurality of serially connected converter cell units is configured, or dedicated, to individually provide power to one (e.g. a single) electrolyzer unit. This means that the converter cell unit can, on its own, drive the operation of the electrolyzer unit connected to it. In some embodiments, every converter cell unit of a branch of the chain-link converter unit may be connected to one electrolyzer unit. In some other embodiments, at least some of the converter cell units of a branch of the chain-link converter unit may be connected to one electrolyzer unit and the remaining converter cell units may either be unconnected or connected to other types of components (such as batteries or fuel cells as will be further described in more detail below). Hence, instead of providing a connection of an electrolyzer unit across a whole branch of a chain-link converter unit, it is proposed in the present disclosure to provide connection of an electrolyzer unit at the level of a converter cell unit of the plurality of serially-connected converter cell units forming the branch of the chain-link converter unit.

Arranging, or distributing, the converter cell units used to drive a plurality of electrolyzer units in the form of a chain-link converter unit in which a converter cell unit is configured to operate one electrolyzer unit is beneficial for reducing the footprint of the system, thereby rendering the system more compact, since no, or at least less, intermediate transformers, passive filters or STATCOMs are needed.

Accordingly, there are provided a system and a method with greater flexibility. Further, the present system and method provide a first function to convert, with the chain-link converter unit, an alternating current received from an electrical power grid to a direct current output to at least one electrolyzer unit of the plurality of serially connected converter units.

The amount of hydrogen produced via electrolysis is expected to increase within the next few years. Thus, having more flexible, and even more reliable, systems (and methods) for providing power to electrolyzers is of interest. The present system provides advantages over other systems since the use of chain-link branches with a plurality of serially-connected converter cell units does not pollute the electrical power grid with harmonics, or at least significantly reduces the occurrence of harmonics on the AC side. Further, compared to prior art systems based on the use of thyristor rectifiers, the need of harmonic filters on the AC side is reduced, and possibly even suppressed. Further, the system and method provide the possibility of controlling reactive power in the electrical power grid. The fast regulation of the reactive power together with the system's possibility to control the active power to the electrolyzer units can be used to stabilize the electrical grid with a high degree of renewables. Thusly, the need of added passive or active reactive power compensation may be reduced, and possibly even suppressed.

Further, since different electrolyzers age differently and may have different reference values for the current or voltage needed to produce a specific amount of hydrogen, it may be advantageous to provide a system where one converter cell unit may be used with one electrolyzer unit. This ensures that each converter cell unit can be controlled in order to deliver an optimal direct current to a specific electrolyzer unit. Further, since the electrolyzer units may have different temperatures during use, i.e. the current needed may vary, it may be advantageous to have the modularity provided by the present system and method.

Further, since the grid code, i.e. requirements on connected devices of the electrical power grid, can be fulfilled with the present system, the need of STATCOMs usually connected to the point of common connection is reduced or even vanished.

Further, the system provides low harmonic content of voltage and current on the DC side, which is beneficial for operation of the electrolyzer unit. The high flexibility of the system is further beneficial to handle and adapt the DC voltage or the DC current of the electrolyzer unit over time since electrolyzer units may degrade over their lifetime. Further, the present system and method may also be used to support island grids.

According to an embodiment, the system further comprises a by-pass switch configured to by-pass the at least one of the plurality of serially-connected converter cell units. The present embodiment is advantageous since it allows for by-passing of malfunctioning converter cell units and/or by-passing of converter cell units connected to malfunctioning electrolyzer units. The at least one chain-link branch comprises a plurality of serially-connected converter cell units that may each be connected to one individual electrolyzer unit. In case one of the converter cell units is malfunctioning, by-passing the specific (malfunctioning) converter cell unit may be advantageous so that the remaining system may still be used normally. In such case, as the voltage across a branch of the chain-link converter unit is shared between (or divided among) the serially-connected converter cell units, bypassing one or more of the converter cell units will increase the voltage across each of the converter cell units remaining under operation. The control unit may therefore also be configured to regulate the voltage across a branch of the chain-link converter unit in case a bypass switch is activated.

According to an embodiment, the at least one electrolyzer unit includes at least one electrolyzer stack comprising a plurality of electrolyzer cells connected in series. The electrolyzer stacks and cells may for example be based on alkaline, proton exchange membrane (PEM) or solid oxide technologies. Advantages of an alkaline electrolyzer unit are, compared to other types of electrolyzer units, that they comprise cheaper catalysts, and have a higher lifespan. Advantages of a PEM electrolyzer unit, compared to other electrolyzers, are that they have a higher current density, are more compact, have a smaller footprint, have a faster response, and allow for a more dynamic operation.

According to an embodiment, the reference value is indicative of at least one of an amount of hydrogen to be produced by the at least one electrolyzer unit, a current to be conducted through the at least one electrolyzer unit, a voltage applied to the at least one electrolyzer unit, and a condition of the at least one electrolyzer unit. The reference value may be any relevant information received at the control unit and indicative of a voltage or current needed to drive the electrolyzer unit.

According to an embodiment, at least one of the plurality of serially-connected converter cell units is configured to supply/receive power to/from at least one battery. At least one of the plurality of serially-connected converter cell units may alternatively, or additionally, be configured to receive power from at least one fuel-cell. In the present embodiment, active power from the battery, or fuel-cell, can be used to energize the electrical power grid. This may be advantageous for stabilizing the electrical power grid and possibly also in case of a power outage. The power received from the battery can for example be used to smoothen out the electrolyzer units' power consumption from the electrical power grid in case an electrolyzer unit with high bandwidth is used, i.e., the response time when tracking the reference may be reduced. It may further be used to buffer the power difference due to slow varying electrolyzer units. Further, batteries may be advantageous since they may be used to improve the fast frequency response functionality of the system. The active power from the battery or fuel-cell can be used together with the reactive power of the chain-link converter unit to handle a grid with 100% renewables in an island or connected via a weak link to the rest of the power system.

The fuel-cells may use hydrogen from a hydrogen storage or a hydrogen pipeline. For example, in general, the fuel-cells may create energy by using hydrogen created by the electrolyzer units. Any batteries may be used, such as for example Li-ion battery racks. Further, any fuel-cell may be used with the system. Further, a system may have more than one converter cell unit connected to a battery, and/or more than one converter cell unit connected to a fuel-cell.

According to an embodiment, the control units is configured to control the power received from the battery or the at least one fuel-cell via the at least one of the plurality of serially-connected converter cell units in order to control an active power and/or a reactive power of the electrical power grid. Controlling the active power and/or reactive power of the electrical power grid using the batteries and/or fuel-cells in the system is advantageous in many aspects, as previously stated. In case of a power outage, the system may still provide active power to the electrical power grid. Further, the electrolyzer power consumption can be leveled out using power from the batteries. The control unit may, by controlling active power of the electrolyzer units and batteries, improve the fast frequency response functionality of the system.

According to an embodiment, the chain-link converter unit further comprises three chain-link branches each coupled to one individual AC line of the transformer. In other words, the present embodiment provides a system for a three-phase AC side.

According to an embodiment, each of the three chain-link branches extends from one individual AC line of the transformer to a common coupling point. Alternatively, according to an embodiment, each of the chain-link branches is connected, at a first end, to a respective AC line and, at a second end to another AC line and to another chain-link branch such that the three chain-link branches are connected in series. The first alternative includes a Y-connection while the second alternative includes a D-connection or a Delta-connection. Other connections of the converter branches may be possible.

According to an embodiment, the at least one of the plurality of serially-connected converter cell units comprises one converter cell with a full bridge topology. The full-bridge converter cell may include any self-commutated semiconductor switches. These self-commutated semiconductor switches include at least insulated-gate bipolar transistors (IGBTs), integrated gate-commutated thyristors (IGCTs), injection-enhanced gate transistors (IEGTs), gate turn-off thyristors (GTOs), and metal-oxide-semiconductor field-effect transistors (MOSFETs).

According to an embodiment, the at least one of the plurality of serially-connected converter cell units comprises a plurality of converter cells connected in parallel, wherein at least one of the plurality of converter cells has a full bridge topology.

According to an embodiment, at least one of the plurality of serially-connected converter cell units comprises a DC/DC converter. The DC/DC converter may be placed between a converter cell unit and an electrolyzer unit. The DC/DC converter may also be placed between a converter cell unit and a battery or fuel-cell. The DC/DC converter may be any conventional DC/DC converter, it may for example be a step down DC/DC converter. The DC/DC converter may for example be a Buck converter. The DC/DC converter may also be a solid-state transformer (SST) DC/DC converter. The DC/DC converter may, in case it includes a transformer such as for example an SST DC/DC converter, galvanically isolate the converter cell unit from the electrolyzer unit, battery or fuel-cell.

According to an embodiment, the control unit is configured to control a direct current output from the DC/DC converter to one electrolyzer unit based on the reference value for driving the electrolyzer unit. In case a DC/DC converter is used, it may be beneficial to control the output from the DC/DC converter to ensure that the electrolyzer unit receives a steady current. The current can be based on the reference value.

According to an embodiment of the second aspect, the at least one of the plurality of serially-connected converter cell units comprises a DC/DC converter arranged between the at least one of the plurality of serially-connected converter cell units and the electrolyzer unit. The step of controlling the at least one of the serially connected converter cell units based on the received reference value includes controlling the DC/DC converter to provide a direct current output to the electrolyzer unit matching the target value.

According to an embodiment of the second aspect, the system further comprises at least one battery or at least one fuel-cell connected to one of the plurality of serially-connected converter cell units. The method further comprises controlling the at least one of the plurality of serially-connected converter cell units that is connected to the at least one battery or the at least one fuel-cell to control an active power or reactive power of the electrical power grid.

Other objectives, features and advantages of the disclosed embodiments will be apparent from the following detailed disclosure as well as from the drawings.

It is noted that embodiments of the present disclosure relate to all possible combinations of features recited in the claims. Further, it will be appreciated that the various embodiments described for the system as defined in accordance with the first aspect and the embodiments described for the method according to the second aspect are all combinable with each other.

### BRIEF DESCRIPTION OF THE DRAWINGS

This and other aspects of the present disclosure will now be described in more detail, with reference to the appended drawings showing embodiment(s) of the disclosure.
Figs. 1-4 schematically show systems according to exemplifying embodiments of the present disclosure.
Fig. 5a schematically shows a converter cell unit that may be used in a system according to an exemplifying embodiment of the present disclosure.
Figs. 5b, 5c, 5d, 5e and 5f schematically show converter cell units connected to electrolyzer units that may be used in systems according to exemplifying embodiments of the present disclosure.
Figs. 6-8 schematically show systems according to other exemplifying embodiments of the present disclosure.
Fig. 9 shows a flowchart of a method according to an exemplifying embodiment of the present disclosure.

### DETAILED DESCRIPTION

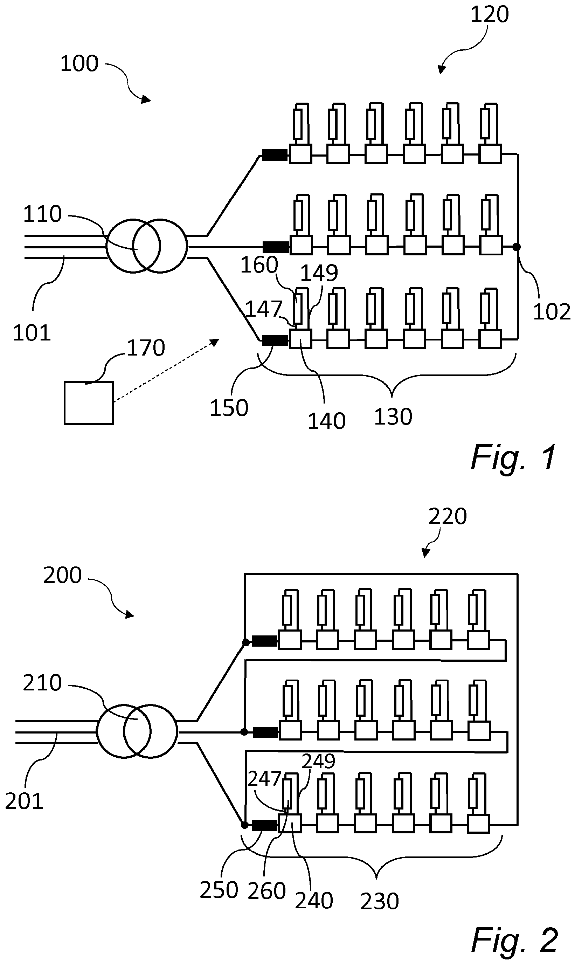

Figure 1 schematically shows a system 100 according to an exemplifying embodiment of the present disclosure.

The system 100 comprises a transformer 110 connectable to an electrical power grid 101 for galvanically isolating the system 100 from the electrical power grid 101 and for adapting an input voltage level associated with an alternating current received from the electrical power grid 101. The electrical power grid 101 may be understood as being part of a local, regional, national, or international electrical power grid, to which the system 100 is connected. The electrical power grid 101 may for example deliver an excess power created by renewable energy sources such as wind or solar power for saving the excess energy as hydrogen for later use. The electrical power grid 101 in the current embodiment has three connection lines for three phases. It is also conceivable that the system 100 is used in other applications with an electrical power grid 101 with less, or more phases.

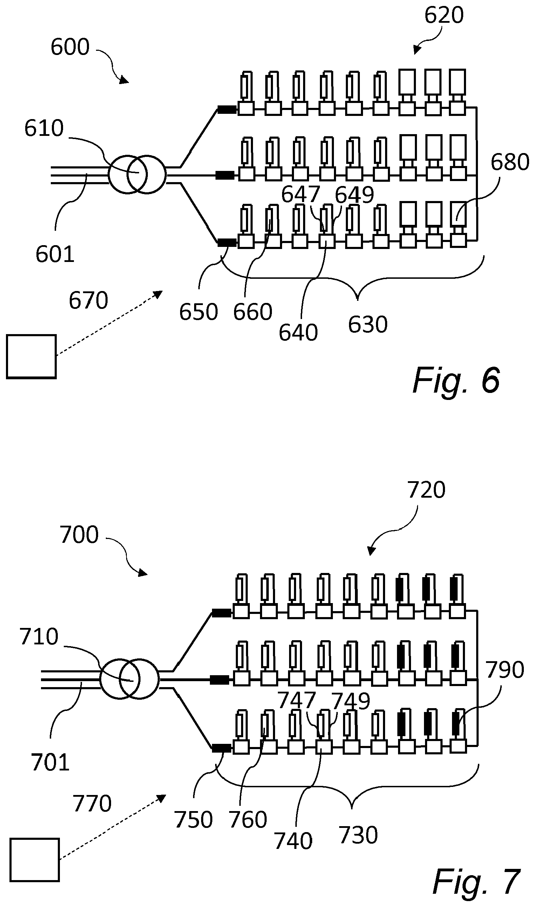

The system 100 further comprises a chain-link converter unit 120. The chain-link converter unit 120 comprises three chain-link branches 130 each coupled to one individual AC line of the transformer. The system 100 could however have more or fewer chain-link branches 130. In other words, in general, the chain-link converter unit 120 may comprise at least one chain-link branch 130. Each of the chain-link branches 130 comprises a plurality of serially-connected converter cell units 140 and an inductor 150. In Figure 1, each of the serially-connected converter cell units 140 comprises a first terminal 147 and a second terminal 149. The first terminal 147 and the second terminal 149 may also be referred to as a positive pole 147 and a negative pole 149. The converter cell unit 140 may provide a direct current output between the first terminal 147 and the second terminal 149. Further, in Figure 1, each of the plurality of serially-connected converter cell units 140 is dedicated to individually provide a direct current to one electrolyzer unit 160 connected between the first terminal 147 and the second terminal 149 of that converter cell unit 140. In Figure 1, each chain-link branch 130 comprises six serially-connected converter cell units 140, each connected to one electrolyzer unit 160. The system shown in Figure 1 is provided as an example and the number of converter cell units 140 in each branch may be different between the branches 130 and it may also be envisaged that not each converter cell unit 140 is coupled to an electrolyzer unit 160. For example, some of the converter cell units 140 may be connected to other components, such as batteries or fuel-cells, as will be described in relation to Figures 6-8.

The system further comprises a control unit 170 configured to control the direct current output from at least one of the plurality of serially-connected converter cell units 140 (i.e. the current output between the first terminal 147 and the second terminal 149 of that converter cell unit) based on a reference value for driving the electrolyzer unit 160 coupled to that converter cell unit 140. The control unit 170 may further be configured to control a plurality of converter cell units 140 based on a plurality of reference values obtained for the electrolyzer units 160 connected to the plurality of converter cell units.

Alternatively, the control unit may receive a single reference value for driving the plurality of electrolyzer units and determine a plurality of target values for driving the plurality of electrolyzer units based on the received single reference value. The control unit may as a result determine control signals for operating the converter cell units associated to the plurality of electrolyzer units.

A reference value may be indicative of an amount of hydrogen to be produced by the electrolyzer unit 160 associated with this reference value or, as mentioned above, in case of a single reference value, may be indicative of an amount of hydrogen to be produced by a plurality of electrolyzer units.

The reference value may also, or alternatively, be indicative of a current to be conducted through the electrolyzer unit(s) 160. Further, the reference value may be indicative of a voltage applied to the electrolyzer unit(s) 160. Also, the reference value may be indicative of a condition of the electrolyzer unit(s) 160. In other words, in general, the reference value may be any relevant information received at the control unit indicative of a voltage or current needed to drive the electrolyzer unit 160.

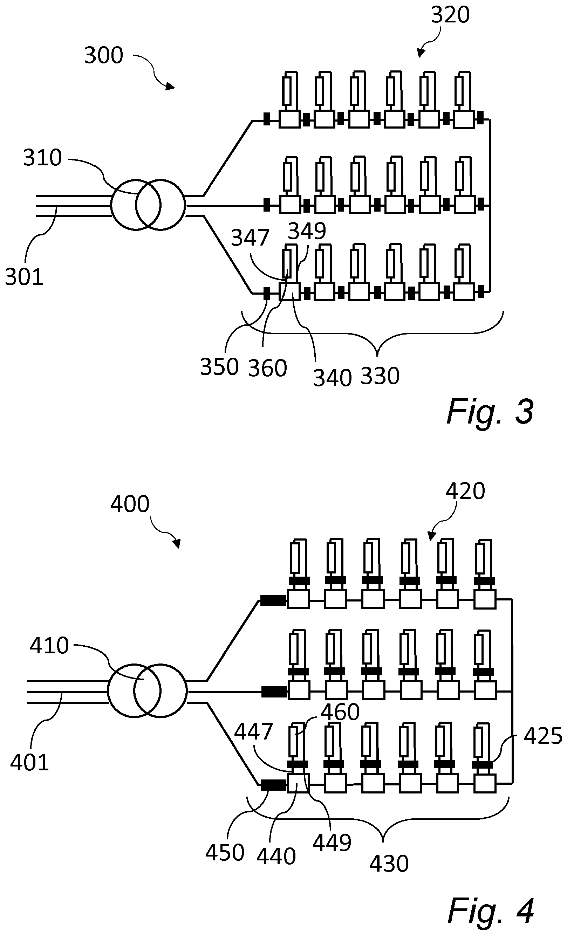

In Figure 1, the inductor 150 of each chain-link branch 130 is placed between the AC line and the converter cell units 140 of each chain-link branch. It is however plausible to have other placements for the inductors 150. For example, instead of using a single inductor, the inductance may be distributed to the plurality of serially-connected converter cell units 140 connected to the system, such as for example described in connection to Figure 3. The inductor 150 may also be referred to as a branch reactor 150 and may be any type of inductor or branch reactor.

The three chain-link branches 130 in Figure 1 extends from one individual AC line of the transformer to a common coupling point 102. This configuration corresponds to a Y-connection. Other connections of the chain-link branches may be possible, such as for example via a Delta-connection as shown in Figure 2.

The plurality of serially-connected converter cell units 140 may comprise different components. As an example, each converter cell unit 140 may comprise a plurality of converter cells connected in parallel. At least one of the plurality of converter cells connected in parallel may have a full bridge topology. In some embodiments, all of the plurality of converter cells connected in parallel may have a full bridge topology.

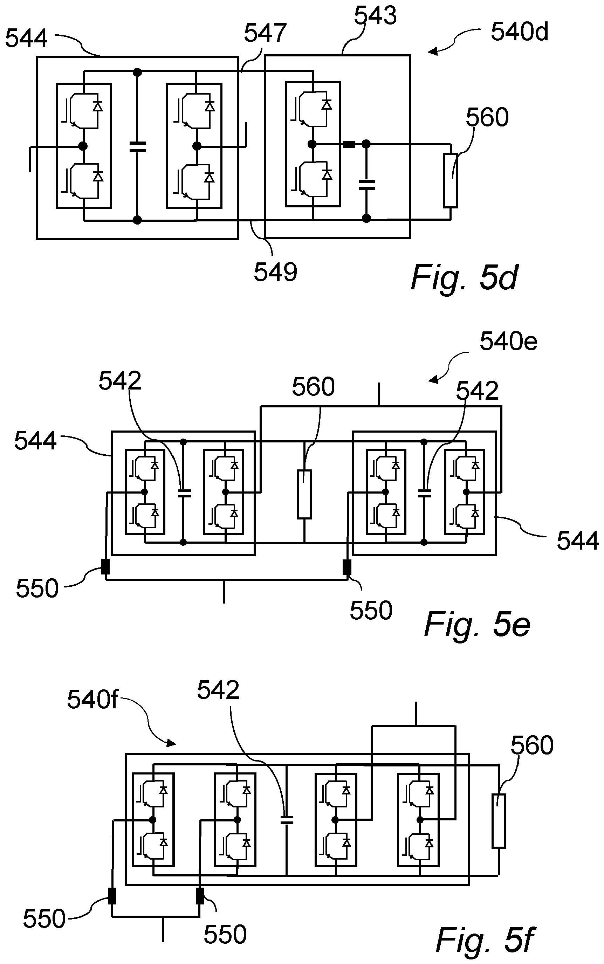

As another example, each converter cell unit 140 may comprise only one converter cell with a full bridge topology. Each chain-link branch 130 may also comprise a mixture of converter cell units 140 with one or more converter cells. Further, at least one of the converter cell units 140 may comprise a DC/DC converter (as further described in more detail with reference to Fig. 5d). The DC/DC converter may be connected between the converter cell unit 140 and the electrolyzer unit 160. The DC/DC converter may be any general DC/DC converter, it may for example be a step down DC/DC converter.

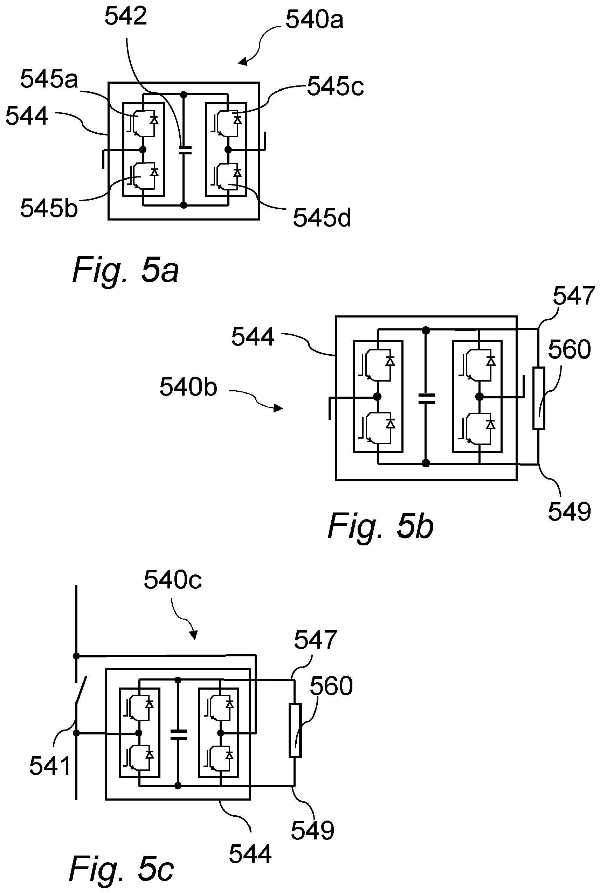

The system 100 may further comprise one or a plurality of by-pass switch(es) configured to by-pass one or some of the plurality of serially-connected converter cell units 140 (as further described in more detail with reference to Fig. 5c). A by-pass switch may be activated to by-pass a malfunctioning converter cell unit 140 or a convert unit upon which a malfunctioning electrolyzer unit 160 is connected.

The transformer 110 may be any standard transformer within the present technological field. The transformer 110 may for example be a two-winding transformer 110. It is however possible to have a three-winding transformer 110 connected to two chain-link converter units 120.

The physical size of the system 100 may be restricted by the size of the electrolyzer units 160 and depending on the physical size of the components used in the system 100, the physical size of the system 100 may vary.

Figure 2 schematically shows a system 200 according to another exemplifying embodiment of the present disclosure.

The system 200 of Figure 2 is equivalent or at least similar to the system 100 described with reference to Figure 1 except that the connection between the three chain-link branches 230 is different. In the system 200, each chain-link branch 230 is connected, at a first end, to a respective AC line and, at a second end opposite to the first end, to another AC line and to another chain-link branch 230 such that the three-chain link branches 230 are connected in series. The connection corresponds to a D-connection or Delta-connection.

Figure 3 schematically shows a system 300 according to an exemplifying embodiment of the present disclosure.

The system 300 of Figure 3 is equivalent or at least similar to the system 100 described with reference to Figure 1 except that the system 300 comprises a plurality of inductors 350. In the system 300, some of the inductors 350 are arranged between two consecutively arranged converter cell units 340 of the plurality of serially-connected converter cell units 340. Such an arrangement of the inductors 350 provides an improved handling of internal ground faults. It may also be envisaged a system 300 with inductors 350 placed between only some of the converter cell units 340.

Figure 4 schematically shows a system 400 according to an exemplifying embodiment of the present disclosure.

The system 400 of Figure 3 is equivalent or at least similar to the system 100 described with reference to Figure 1 except that the system 400 further comprises a plurality of filters 425. The filters 425 may be RC-filters comprising at least one resistor and at least one capacitor. A filter 425 may also include at least one power electronic device configured to filter harmonics. A filter 425 may also be a combination of an RC-filter and power electronic devices. In general, a filter 425 may be one of, or a combination of, a passive filter and an active filter. A filter 425 is electrically connected in parallel with a respective converter cell unit 440 between the first terminal 447 of the converter cell unit and its second terminal 449, as shown in Fig. 4. In some example systems, only some of the serially-connected converter cell units 440 may have filters 425 coupled to them. Further, a filter 425 may be replaced with a surge arrestor in order to limit overvoltages. It is also envisioned to have both a filter 425 and a surge arrestor coupled between at least one converter cell unit and an electrolyzer unit.

Figure 5a schematically shows a converter cell unit 540a that may be used in a system according to any exemplifying embodiment of the present disclosure.

In certain embodiments of the present disclosure, the converter cell units 540a may comprise a single converter cell 544 having a full bridge topology as shown in Figure 5a. The converter cell unit 540a in Figure 5a comprises a converter cell with a first to fourth semiconductor switch 545a, 545b, 545c, 545d that are connected in a full-bridge configuration. The converter cell 544 further comprises an energy storage which is typically implemented as a capacitor arrangement comprising at least one capacitor 542. The capacitor 542 is configured to store electrical energy and thereby provide a voltage. The semiconductor switches 545a, 545b, 545c, 545d may include any self-commutated semiconductor switches. These self-commutated semiconductor switches include at least insulated-gate bipolar transistors (IGBTs), integrated gate-commutated thyristors (IGCTs), injection-enhanced gate transistors (IEGTs), gate turn-off thyristors (GTOs), and metal-oxide-semiconductor field-effect transistors (MOSFETs).

In some embodiments, the converter cell unit 540a may comprise a plurality of converter cells connected in parallel. In that case, at least one of the plurality of converter cells may have a full bridge topology such as shown in Figure 5a.

Figure 5b schematically shows a converter cell unit 540b connected to an electrolyzer unit 560 that may be part of a system according to any exemplifying embodiment of the present disclosure.

The converter cell unit 540b is similar to the converter cell unit 540a described in relation to Figure 5a. The converter cell unit 540b comprises one converter cell 544 with a full bridge topology. An electrolyzer unit 560 is connected between a first terminal 547 and a second terminal 549 of the converter cell unit 540b. The electrolyzer unit 560 may be any electrolyzer unit and may for example be at least one electrolyzer stack comprising a plurality of serially-connected electrolyzer cells.

Figure 5c schematically shows a converter cell unit 540c connected to an electrolyzer unit 560 that may be part of a system according to any exemplifying embodiment of the present disclosure.

The converter cell unit 540c is similar to the converter cell unit 540b described in relation to Figure 5b. The converter cell unit 540c further comprises a by-pass switch 541 configured to by-pass the converter cell unit 540c. In case the converter cell unit 540c or the electrolyzer unit 560 malfunctions, the by-pass switch may be activated (e.g. by the control unit) to bypass the converter cell unit 540c. Since the system comprises a plurality of serially-connected converter cell units, malfunctioning converter cell units may advantageously be bypassed to make sure that the remaining converter cell units may still be used.

Figure 5d schematically shows a converter cell unit 540d connected to an electrolyzer unit 560 that may be part of a system according to any exemplifying embodiment of the present disclosure.

The converter cell unit 540d is similar to the converter cell unit 540b described in relation to Figure 5b. The converter cell unit 540d further comprises a DC/DC converter 543. The DC/DC converter 543 may for example be a step down DC/DC converter 543. The DC/DC converter 543 is connected between the converter cell 544 of the converter cell unit 540d and the electrolyzer unit 560. A control unit, as described throughout the present description, may in this example control a direct current output from the DC/DC converter 543 to the electrolyzer unit 560 based on a reference value for driving the electrolyzer unit.

Figure 5e schematically shows a converter cell unit 540e connected to an electrolyzer unit 560 that may be part of a system according to any exemplifying embodiment of the present disclosure.

The converter cell unit 540e comprises two converter cells 544, with full bridge topology, coupled in parallel. This may be advantageous in case a higher voltage or current is needed to drive the electrolyzer unit 560. In the embodiment disclosed in Figure 5e, both converter cells 544 have a full bridge topology. In this embodiment, as can be seen in Figure 5e, each converter cell 544 is coupled to one inductor 550. In case converter cell units 540 as the one described in Figure 5e would be used in a system as disclosed in this application, for example the system 300 disclosed in Figure 3, each inductor 350 may be interchanged for two inductors 550 or the two inductors 550 may be used in addition to the inductors 350 for each converter cell unit 540.

Figure 5f schematically shows a converter cell unit 540f connected to an electrolyzer unit 560 that may be part of a system according to any exemplifying embodiment of the present disclosure.

The converter cell unit 540f is similar to the embodiment of Figure 5e since it may provide a higher power output to the electrolyzer unit 560 than a converter cell unit as disclosed in, for example, Figure 5b. The converter cell unit 540f of Figure 5f has more semiconductor switches compared to the embodiment disclosed in Figure 5b. In this example, the converter cell unit 540f has eight semiconductor switches. Compared to the configuration shown in Figure 5b, the converter cell unit 540f has two phase legs connected in parallel, both in and out of the converter cell unit 540f, with two semiconductor switches coupled to each leg. Similar to the embodiment described with reference to Figure 5e, each phase leg includes an inductor 550.

A system according to the present disclosure may include converter cell units using one or more of the converter cell units described with reference to Figures 5a-5f.

Figure 6 schematically shows a system 600 according to another exemplifying embodiment of the present disclosure.

The system 600 is similar to the system 100 described with reference to Figure 1. The system 600 comprises three chain-link branches 630. Each of the chain-link branches 630 comprises nine serially-connected converter cell units 640. Six of the converter cell units 640 of each chain-link branch 630 are connected to one individual electrolyzer unit 660 while three (other) of the converter cell units 640 of each chain-link branch 630 are connected to batteries 680. The converter cell units 640 that are connected to the batteries may be configured to supply power to the batteries 680 in order to charge the batteries 680. The converter cell units 640 that are connected to the batteries may further be configured to receive power from the batteries 680. The control unit 670 may control the received power from the batteries 680 via the converter cell units 640 in order to control an active power and/or a reactive power of the electrical power grid 601.

The batteries 680 may be any kind of suitable batteries such as, for example, Li-ion battery racks. In some configurations, as compared to the system 600 shown in Fig. 6, more or fewer converter cell units 640 of the system 600 may be connected to batteries 680. The chain-link branches 630 may comprise an arbitrary number of serially-connected converter cell units 640 and some may be connected to electrolyzer units 660 while others are connected to batteries 680.

Figure 7 schematically shows a system 700 according to an exemplifying embodiment of the present disclosure.

The system 700 is similar to the system 600 described in relation to Figure 6. The system 700 differs in that three converter cell units 740 of each chain-link branch 730 are connected to fuel-cells 790 instead of batteries. The fuel-cells 790 may be any type of fuel-cells 790 and more for example be hydrogen fuel-cells 790. With fuel-cells 790 electric power can be created from consumption of hydrogen and oxygen. The converter cell units 640 connected to fuel-cells 790 may be configured to receive power from the fuel-cells 790 that can be used to energize the electrical power grid 701.

The control unit 770 may be configured to control the power received from the fuel-cells 790 via the converter cell units 740 in order to control an active power and/or reactive power of the electrical power grid 701. The system 700 may comprise an arbitrary number of fuel-cells 790 each connected to a converter cell unit 740. The example in Figure 7 is not meant to be limiting and merely acts as an example on how the chain-link converter unit 720 may be configured.

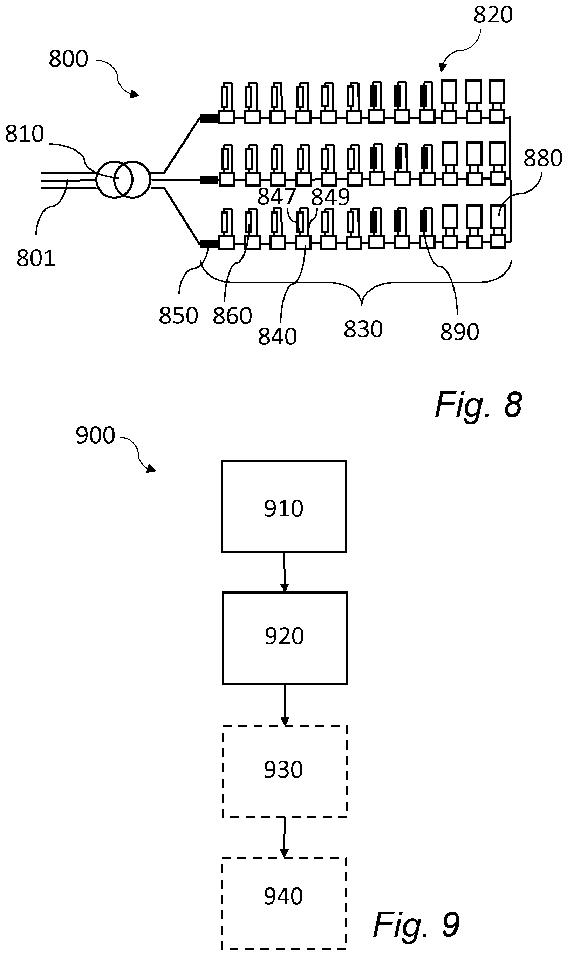

Figure 8 schematically shows a system 800 according to an exemplifying embodiment of the present disclosure.

The system 800 is similar to the systems described in relation to the previous figures. The system 800 comprises three chain-link branches 830. Each chain-link branch 830 comprises a plurality of serially-connected converter cell units 840. Six of the converter cell units 840 of each chain-link branch 830 are connected to electrolyzer units 860. Three of the converter cell units 840 of each chain-link branch 830 are connected to fuel-cells 890 and three of the converter cell units 840 of each chain-link branch 830 are connected to batteries 880. A converter cell unit 840 connected to one electrolyzer unit 860 may be dedicated to individually provide a direct current to said one electrolyzer unit 860 connected between a first 847 and a second terminal 849 of the converter cell unit 840. The converter cell units 840 connected to the batteries 880 may be configured to supply/receive power to/from the batteries 880. The converter cell units 840 connected to the fuel-cells 890 may be configured to receive power from the fuel-cells 890. The system 800 shown in Fig. 8 is an example of a system and other examples with variations as those described in the other embodiments may be possible. For example, the chain-link branches 830 may be connected in a Delta-configuration as in Figure 2 instead of a Y-connection. Further, as an example, the number of chain-link branches 830 may vary, and the number of converter cell units 840 of each branch may also vary.

Figure 9 shows a flowchart of a method 900 according to an exemplifying embodiment of the present disclosure.

The method 900 may be implemented in a control unit configured for controlling a system according to any exemplifying embodiment of the present disclosure, such as those described with reference to the previous Figures.

The method 900 comprises receiving 910 a reference value for driving the electrolyzer unit. As mentioned above, the reference value may be indicative of a target value for the direct current output between the first terminal and the second terminal. The reference value could alternatively be indicative of a voltage drop across the first and second terminals of the converter cell unit or both the direct current output and the voltage drop. The reference value may be a voltage value or a current value. The reference value may alternatively be an amount of hydrogen to be created by the individual electrolyzer unit. The reference value may alternatively be a collective reference value, i.e. a value shared by all electrolyzer units connected to system, in which case the control unit may determine an individual reference value for an individual electrolyzer unit based on the collective reference value. The reference value may be any reference value related to the electrolyzer unit that may be indicative of a voltage or current for operating the electrolyzer unit.

The method 900 further comprises controlling 920 the at least one of the serially-connecter converter cell units based on the received reference value. In case the received reference value is indicative of a target value for the direct current output, the controlling 920 of the converter cell unit may control the direct current output from the converter cell unit. In case the received reference value is a current value, then the controlling 920 may be performed in order for the system to match the direct current output with the current value.

The method 900 may, in some embodiments, include more steps. For example, in case the at least one of the serially-connected converter cell units comprises a DC/DC converter arranged between the at least one of the plurality of serially-connected converter cell units and the electrolyzer unit, then the step of controlling 920 the at least one of the serially-connected converter cell units based on the received reference value includes controlling 930 the DC/DC converter to provide a direct current output to the electrolyzer unit matching the target value.

In case the system comprises at least one battery or at least one fuel-cell connected to one of the plurality of serially-connected converter cell units, the method 900 may further comprise controlling 940 the at least one of the plurality of serially-connected converter cell units that is connected to the at least one battery or the at least one fuel-cell to control an active power or reactive power of the electrical power grid.

While the present invention has been illustrated in the appended drawings and the foregoing description, such illustration is to be considered illustrative or exemplifying and not restrictive; the present invention is not limited to the disclosed embodiments. Other variations to the disclosed embodiments can be understood and effected by those skilled in the art in practicing the claimed invention, from a study of the drawings, the disclosure, and the appended claims. In the appended claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A system (100) comprising:
a transformer (110) connectable to an electrical power grid (101) for galvanically isolating the system from the electrical power grid and for adapting an input voltage level associated with an alternating current received from the electrical power grid;
a chain-link converter unit (120) comprising at least one chain-link branch (130) connected to an AC line of the transformer, wherein the at least one chain-link branch comprises a plurality of serially-connected converter cell units (140) and an inductor (150), wherein at least one of the plurality of serially-connected converter cell units comprises a first terminal (147) and a second terminal (149), and wherein the at least one of the plurality of serially-connected converter cell units is dedicated to individually provide a direct current to one electrolyzer unit (160) connected between the first terminal and the second terminal; and
a control unit (170) configured to control the direct current output from the at least one of the plurality of serially-connected converter cell units based on a reference value for driving the electrolyzer unit.

2. The system according to claim 1, further comprising a by-pass switch (541) configured to by-pass the at least one of the plurality of serially-connected converter cell units.

3. The system according to claim 1 or 2, wherein the at least one electrolyzer unit includes at least one electrolyzer stack comprising a plurality of electrolyzer cells connected in series.

4. The system according to any one of the preceding claims, wherein the reference value is indicative of at least one of an amount of hydrogen to be produced by the at least one electrolyzer unit, a current to be conducted through the at least one electrolyzer unit, a voltage applied to the at least one electrolyzer unit, and a condition of the at least one electrolyzer unit.

5. The system according to any one of the preceding claims, wherein at least one of the plurality of serially-connected converter cell units is configured to supply/receive power to/from at least one battery and/or wherein at least one of the plurality of serially-connected converter cell units is configured to receive power from at least one fuel-cell.

6. The system according to claim 5, wherein the control unit is configured to control the power received from the battery or the at least one fuel-cell via the at least one of the plurality of serially-connected converter cell units in order to control an active power and/or a reactive power of the electrical power grid.

7. The system according to any one of the preceding claims, wherein the chain-link converter unit further comprising three chain-link branches each coupled to one individual AC line of the transformer.

8. The system according to claim 7, wherein each of the three chain-link branches extends from one individual AC line of the transformer to a common coupling point (102) or wherein each of the chain-link branches is connected, at a first end, to a respective AC line and, at a second end opposite to the first end, to another AC line and to another chain-link branch such that the three chain-link branches are connected in series.

9. The system according to any one of the preceding claims, wherein the at least one of the plurality of serially-connected converter cell units comprises one converter cell (544) with a full bridge topology.

10. The system according to any one of claims 1-8, wherein the at least one of the plurality of serially-connected converter cell units comprises a plurality of converter cells connected in parallel, wherein at least one of the plurality of converter cells has a full bridge topology.

11. The system according to any one of the preceding claims, wherein at least one of the plurality of serially-connected converter cell units comprises a DC/DC converter (543).

12. The system according to claim 11, wherein the control unit is configured to control a direct current output from the DC/DC converter to one electrolyzer unit based on the reference value for driving the electrolyzer unit.

13. A method (900) for controlling a system (100) comprising a transformer connectable to an electrical power grid for galvanically isolating the system from the electrical power grid and for adapting an input voltage level associated with an alternating current received from the electrical power grid, a chain-link converter unit comprising at least one chain-link branch connected to an AC line of the transformer, wherein the at least one chain-link branch comprises a plurality of serially-connected converter cell units and an inductor, wherein at least one of the plurality of serially-connected converter cell units comprises a first terminal and a second terminal, and wherein the at least one of the plurality of serially-connected converter cell units is dedicated to individually provide a direct current to one electrolyzer unit connected between the first terminal and the second terminal, the method comprising:
receiving (910) a reference value for driving the electrolyzer unit and indicative of a target value for a direct current output between the first terminal and second terminal;
controlling (920) the at least one of the serially-connected converter cell units based on the received reference value.

14. The method according to claim 13, wherein the at least one of the plurality of serially-connected converter cell units comprises a DC/DC converter arranged between the at least one of the plurality of serially-connected converter cell units and the electrolyzer unit, and wherein controlling the at least one of the serially connected converter cell units based on the received reference value includes controlling (930) the DC/DC converter to provide a direct current output to the electrolyzer unit matching the target value.

15. The method according to claim 13 or 14, wherein the system further comprises at least one battery or at least one fuel-cell connected to one of the plurality of serially-connected converter cell units, and wherein the method further comprises:
controlling (940) the at least one of the plurality of serially-connected converter cell units that is connected to the at least one battery or the at least one fuel-cell to control an active power or a reactive power of the electrical power grid.
